# EUROPEAN PATENT APPLICATION

(11) **EP 2 418 108 A1**
(43) Date of publication of application: **15.02.2012**
(21) Application number: 10425278.8
(22) Date of filing: 12.08.2010
(51) Int. Cl.: B60G 7/00, B60G 3/20, B60G 15/06, B60G 11/14

(54) **Motor-vehicle suspension with a device for varying the camber angle**

(71) Applicant: Amenduni Gresele, Massimo, 36100 Vicenza (IT)
(72) Inventor: Zona, Mauro, 10153 Torino (IT)
(74) Representative: Gallarotti, Franco

(57) **Abstract**

Herein described is a suspension (100, 400) for an axle of a motor vehicle (300), comprising, for each wheel (302, 304) of the axle,:
- a first transverse arm (102, 402),
- a second transverse arm (204, 404),
- a wheel support (106, 406)

and further comprising an elastic-damping unit (108, 408) including an elastic element (214, 454) and a damper (212, 452),
wherein the first transverse arm (102, 402) comprises a first end (130, 132; 414, 416) prearranged for articulation with respect to a support structure (110, 410) and a second end (116, 418) articulated to the wheel support (106, 406),

The suspension (100, 400) is characterised in that:
- the second transverse arm (104, 404) comprises a first end (156, 424) articulated with respect to a mobile element (194, 450) operatively connected to an actuator unit (202, 204, 206) and a second end (128, 426) articulated to the wheel support (106, 406),
- there is provided an actuator unit (202, 204, 206;) associated to each wheel (302, 304) of said axle
- the mobile element (194, 450) is housed in the support structure (110, 410) and it is slidable with respect thereto,
- the actuator unit (202, 204, 206) comprises an electric motor (206) operatively connected to the mobile element (194, 450),
- the actuator unit (202, 204, 206) is actuatable to cause a sliding of the mobile element (194, 450) with respect to the support structure (110, 410) to vary the position of the first end (156, C; 424, C') of the second transverse arm (104, 404) with respect to the support structure (110, 410),
- it comprises a control unit (CU) operatively connected to said electric motor (206) to control the actuation of the mobile element (194, 450) for controlling a camber angle (γ) of said wheel (302, 304)
- said elastic element (214, 454) has ends comprised between the first transverse arm (102, 402) and the support structure (110, 410).

## Description

### Field of the invention

The present invention refers to a suspension for an axle of a motor vehicle comprising, for each wheel of said axle:
- a first transverse arm,
- a second transverse arm,
- a wheel support,
and further comprising an elastic-damping unit including an elastic element and a damper,
wherein said first transverse arm comprises a first end arranged for the articulation with respect to a support structure and a second end articulated to said wheel support.

### General technical problem and description of the prior art

Suspensions are fundamental components for any motor vehicle. Not only do they decouple the motion of the chassis of the vehicle with respect to that of the wheels, reducing the amount and the extent of the impulsive forces that are transmitted to the chassis itself, but they also play an absolutely fundamental role as regards with the overall vehicle dynamics, given that the suspensions and the geometry thereof may have a considerable impact on the vehicle travel dynamics, particularly, but not only, in a bend.

It is known, to a man skilled in the art, that in the kinematic design of the suspension some characteristic geometric parameters are defined according to the behaviour which the suspension is requested to have under particular conditions.

In particular, the geometry of the suspension varies during a movement thereof, hence varying the set-up parameters of the vehicle, which is susceptible to considerably vary the interaction between the tyre associated to the suspension and the ground surface.

Thus, for example, when designing suspensions particular attention is given to the kinematic design and the choice of the kinematic gradients of a suspension so as to obtain the uttermost exploitation of the tyre during movement and travelling through a bend, which sometimes requires giving up an optimal exploitation of the tyre itself when the movement of the suspension is slight or when the vehicle is travelling on a straight road.

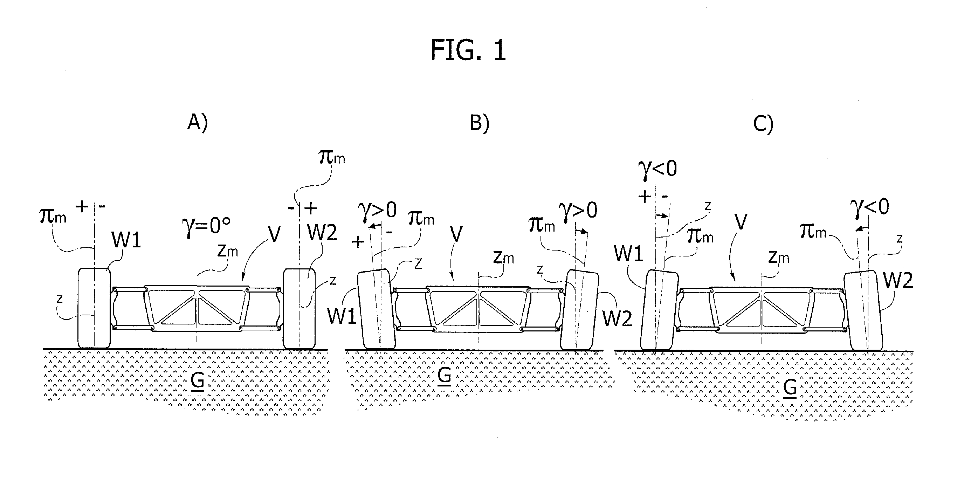

Among all geometric parameters characterising a motor vehicle suspension, regarding the description that follows, the camber angle acquires a particular importance. With reference to figure 1, schematically illustrating an axle of a vehicle V front viewed and laying against a ground G, the camber angle, indicated with letter γ, is defined as the angle comprised between a median plane πₘ of a wheel W1, W2, orthogonal to the rotational axis of the latter and a vertical direction z. The value of the camber angle is conventionally measured by observing the vehicle, standstill, from the front and with the wheel in the straight travel position.

Conventionally, a camber angle γ such that the median plane πₘ of the wheel W1, W2 intersects a vertical axis zₘ passing through the centreline of the vehicle V beneath the ground G (figure 1B) is considered positive, while a camber angle γ such that the median plane πₘ of the wheel W1, W2 intersects the vertical axis zₘ passing through the centreline of the vehicle V above the ground G is considered negative.

Naturally, the camber angle γ is zero (neutral camber) when the median plane πₘ of the wheel W1, W2 is perfectly parallel, in the reference taken into account for the measurement, to a vertical direction (z or zₘ equivalently).

Generally, vehicles having suspensions of the known type have a setup that envisages the presence of a camber angle γ slightly negative on the four wheels for the utmost exploitation of the wheels when travelling through a bend.

Actually, when a vehicle is travelling through a bend, the sprung mass of the vehicle itself is subjected to a roll motion which causes a variation of the geometry of the suspensions (with corresponding actions on the elastic elements of the latter) and an ensuing variation of camber. By selecting a negative camber angle γ, the camber variation induced by the roll of the sprung mass of the vehicle leads to a substantial annulment of the angle γ for that, between the wheels of the same axle, which is external with respect to the trajectory of the bend.

In such condition, the tyre-ground contact is optimal, hence guaranteeing maximum grip of the outer wheel when travelling through the bend. However, the contact is not optimal in conditions of straight travel (wherein the roll of the sprung mass is substantially zero), and hence also having an impact on the wear of the tyre, which is less uniform.

It is thus clear that the optimal condition for the tyre-ground contact is always that in which the wheel has a zero camber and it is perfectly vertical with respect to the ground surface. However, in the suspensions of the prior art, such condition cannot be attained given that, considering the constraints and the geometry of the suspension itself, it is necessary to accept a variation of the camber angle γ depending on the relative movement between the suspension and the sprung mass, in particular the chassis of the vehicle.

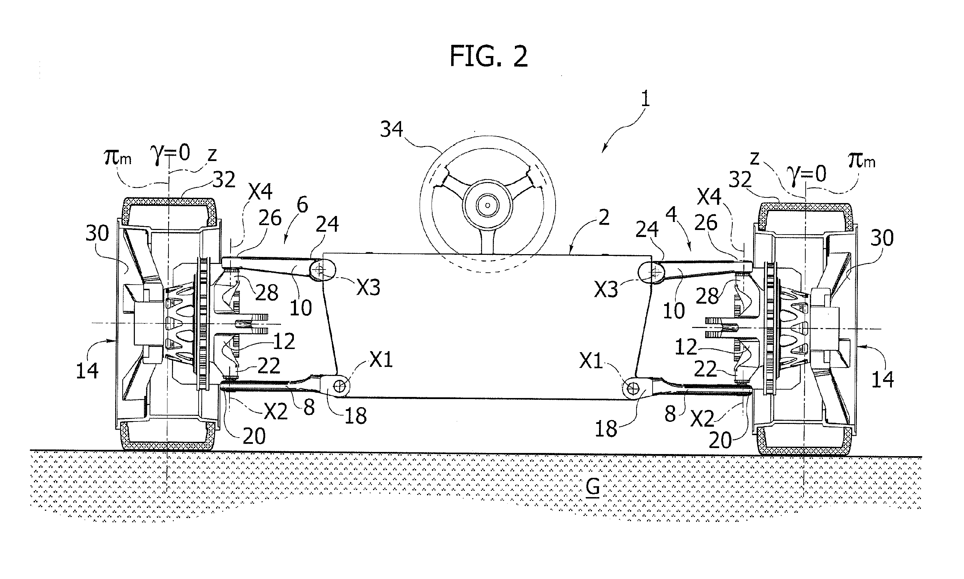

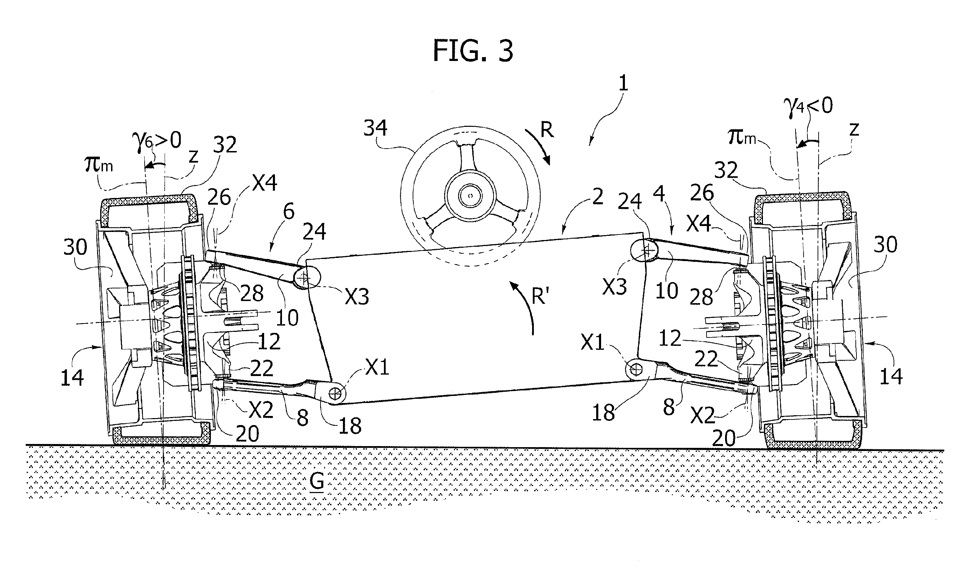

With reference to figures 2, 3, which illustrate a sequence of travel along a curvilinear trajectory by a vehicle (represented schematically) on which conventional suspensions - double wishbone in this case - are installed, it should be observed how the choice of using a suspension with zero camber angle in rest conditions is substantially inadequate should the vehicle be negotiating a bend.

As a matter of fact, a vehicle on which conventional suspensions are installed is indicated with 1 in figure 2. The vehicle 1 comprises a chassis 2, represented schematically herein, on which two quadrilateral suspensions 4, 6 identical to each other are installed.

The suspension 4 comprises a lower arm 8, an upper arm 10, a wheel support 12 and a wheel 14 mounted on the wheel support 12. The lower arm 8 comprises a first end 18 articulated with respect to the chassis 2 around an axis X1 substantially horizontal and longitudinal and a second end 20 articulated with respect to a lower end 22 of the wheel support 12 around a substantially vertical axis X2 (defining a first ball joint). The upper arm 10 comprises a first end 24 articulated with respect to the chassis 2 around a third axis X3 substantially horizontal and longitudinal and a second end 26 articulated with respect to an upper end 28 of the wheel support 12 around a substantially vertical fourth axis X4 (forming a second ball joint).

It should be observed that the chassis 2 substantially defines a support structure for the arms of the suspension 4. The wheel 14 is fixed to the wheel support 12 and comprises a rim 30 onto which the tyre 32 is fitted.

The suspension 6 is perfectly identical to the suspension 4 thus the components thereof are indicated using the same reference numbers.

A steering axis for each of the suspensions 4, 6 around which the wheel supports 12 rotate when the steering input is imparted to the vehicle through the driving wheel 34 - arranged inside the cabin of the vehicle 1 itself - is defined by linking the articulation points of the wheel supports 12 with respect to the arms 6, 8.

With reference to figure 3, after a rotation of the driving wheel 34 in a direction R, the chassis 1 is subjected to a roll motion in a direction R' opposite to direction R which, simultaneously, generates deformations and relative movements of the suspensions 4, 6 with respect to the chassis 2 which result in variations of the camber angle γ with opposite directions.

In particular, the suspension 6 is associated to the side of the vehicle 1 that is external with respect to the curvilinear trajectory which is travelled through and the wheel 14 connected thereto is the most loaded among the wheels of the vehicle 1.

In figure 3 the wheels are represented in a position characteristic of the straight travel just for the sake of clarity of the representation; naturally, they would be actually steered to allow the vehicle 1 to travel the bend.

It should be observed how, starting from a zero camber condition such as that illustrated in figure 2, the movement imposed to the suspension 6 by the roll motion of the chassis 2 during the travel along a curvilinear trajectory brings the camber angle (indicated with an angle γ₆>0) of the wheel 14 associated thereto to positive values, which is considerably different from the conditions required to obtain an ideal grip between the tyre and ground (the camber angle of the wheel 14 associated to the suspension 4 is instead indicated with an angle γ₄<0).

Thus, it is clear that the choice of a setup with zero camber angles on one hand guarantees excellent motion dynamics when travelling straight or through a wide radius bend, but on the other hand it is substantially inefficient when travelling through a small radius bend at high speed. Such problem is further worsened in cases where the suspension is not that of a road vehicle but that of a racing vehicle, wherein the grip between the tyre and the ground is fundamental for attaining maximum performance.

The previously described technical problem was addressed and overcome in a plurality of prior art documents, among which, for example, US 2009/0026719 A1 and EP 1 754 649 A1. In the latter, there is illustrated a solution comprising a vehicle provided with double wishbone suspensions wherein the upper arms of the suspensions have the end which would be generally articulated to the chassis connected to a threaded bar which is operatively connected to a gearmotor unit, is illustrated in the latter document. Thus, by actuating the gearmotor unit it is possible to vary the position of the articulation points of the upper arms with respect to the threaded bar relatively to the chassis of the vehicle, thus varying the camber angle of the suspensions.

This is particularly useful in cases where one desires to provide the vehicle with a setup having a zero camber angle, given that it would be possible to compensate the camber while travelling through a bend by simply actuating the gearmotor unit.

However, such device reveals a very clear drawback. In particular, given that the upper suspension arms belong to the same axle connected to the same gearmotor unit, it is clear that the controllable camber variations are symmetric and with opposite directions, which however does not guarantee the ideal grip conditions given that in the suspensions of the same axle, the roll motion of the chassis of the vehicle induces camber variations with opposite direction and of different magnitude.

In document US2009/0026719A1 there is illustrated a device for the active variation of the camber angle cooperating with an anti-roll bar which is part of an entirely hydraulic actuation system. Such system, though generally apparently efficient, reveals a serious technical drawback lying in the hydraulic actuation, given that it is well known to a man skilled in the art that, both the time constants typical of hydraulic systems and the displacement precision are not compatible with the dynamics required for a system of this kind.

### Object of the invention

The object of the present invention is that of overcoming the previously described technical drawbacks. In particular, the object of the invention is that of providing a suspension for motor vehicles wherein the camber angle may be continuously varied depending on the motion dynamics of the vehicle and having actuation times compatible with the characteristic times of the system.

### Summary of the invention

The object of the present invention is attained by a suspension for an axle of a motor vehicle having the characteristics forming the subject of one or more of the claims that follow, which form an integral part of the technical disclosure provided herein in relation to the invention. In particular, the object of the invention is attained by a suspension for an axle of a motor vehicle having all the characteristics listed at the beginning of the present description and further characterized in that:
- said second transverse arm comprises a first end articulated with respect to a mobile element operatively connected to an actuator unit and a second end articulated to said wheel support,
- there is provided an actuator unit associated to each wheel of said axle,
- said mobile element is housed in said support structure and it is slidable with respect to it,
- said actuator unit comprises an electric motor operatively connected to said mobile element,
- said actuator unit is actuatable to cause a sliding of said mobile element with respect to said support structure to vary the position of the first end of the second transverse arm with respect to said support structure,
- comprises a control unit operatively connected to said electric motor to control the actuation of said moveable element for controlling a camber angle of said wheel,
- said elastic element has ends comprised between said first transverse arm and said support structure.

### Brief description of the drawings

The invention will now be described with reference to the attached drawings, purely provided by way of non-limiting example, wherein:
- figure 1, previously described, is a schematic illustration of three possible set-up conditions in a vehicle,
- figures 2, 3, previously described, illustrate a sequence of travelling a curvilinear trajectory by a vehicle, represented schematically,
- figure 4 is a perspective view of a suspension according to a first embodiment of the present invention,
- figure 4A is a partly sectioned view corresponding to figure 4,
- figure 4B is a sectional view according to line IV-IV of figure 4,
- figure 5 is a view according to arrow V of figure 4,
- figures 6, 7 substantially correspond to figures 2, 3 but they refer to a vehicle provided with suspensions according to the present invention, and
- figure 8 is a partly sectioned perspective view of a second embodiment of a suspension according to the present invention.

### Detailed description of the invention

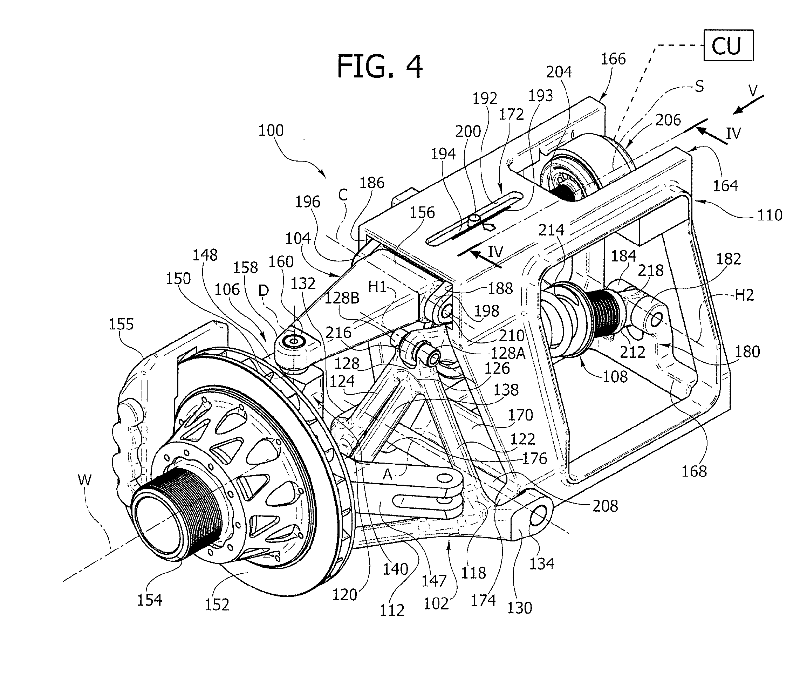

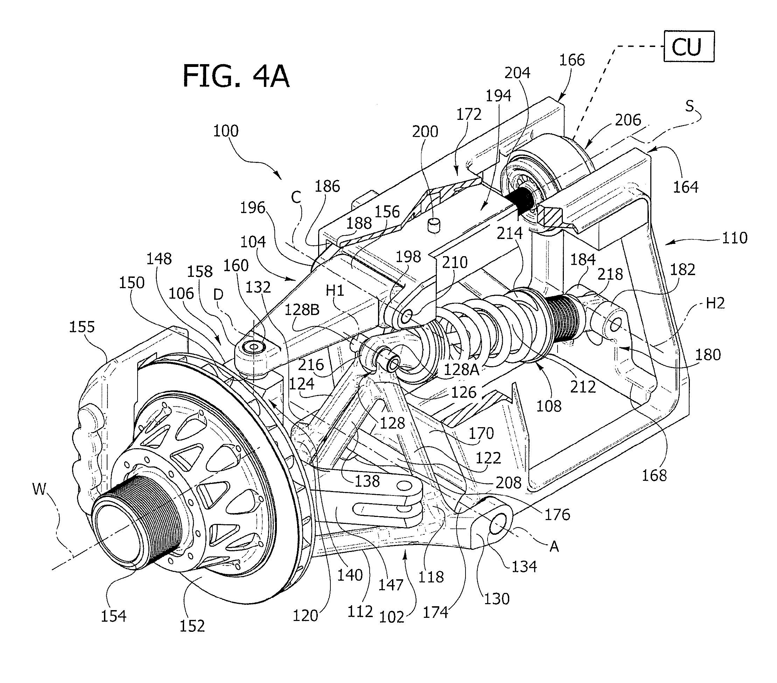

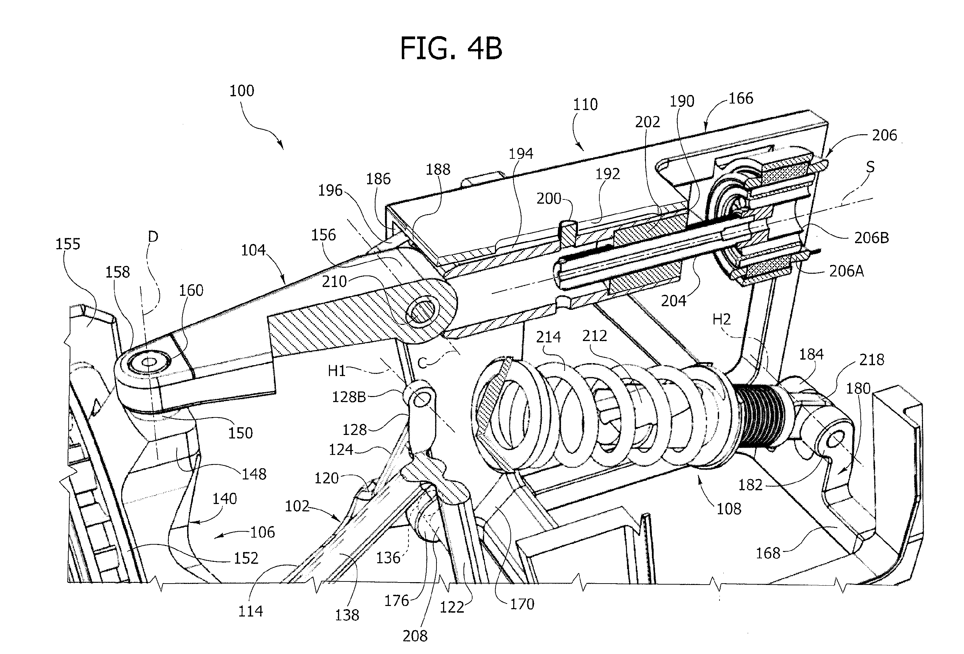

A suspension for an axle of a motor vehicle according to the present invention is indicated with 100 in figure 4. The suspension 100 comprises a first transverse arm 102, a second transverse arm 104, a wheel support 106 arranged for the connection to a wheel (not illustrated) and an elastic-damping unit 108. The suspension 100 is also arranged for the connection to a support structure generally indicated with 110.

In the present description, the first and the second transverse arm 102, 104 shall be identified, respectively, using the terms "lower arm" and "upper arm".

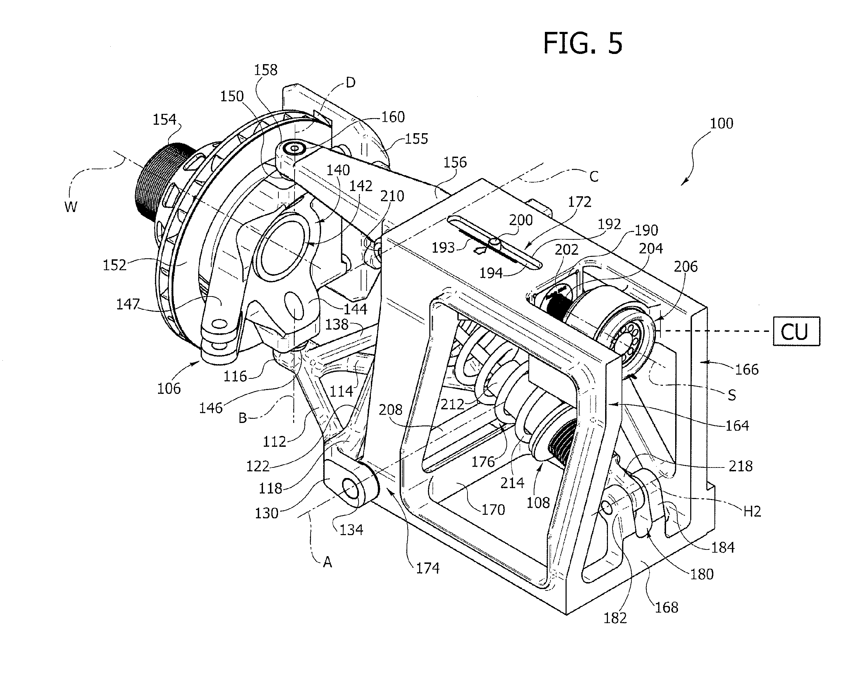

With reference to figures 4, 4A, 4B, 5, the lower arm 102 comprises a plurality of straight beams joined together at structural nodes and arranged according to a scheme entirely analogous to that of the edges of a tetrahedron. In particular, the lower arm 102 comprises a first and a second straight beam 112, 114 coplanar with respect to each other and substantially arranged to form a "V" and integral at a first structural node 116, substantially shelf-like-shaped, in which a spherical seat is formed.

At the opposite end of the beams 112, 114 with respect to the structural node 116 there are provided a second and a third structural node 118, 120 on which a third and a fourth straight beam 122, 124 also substantially arranged to form a "V", coplanar and substantially orthogonal with respect to a plane passing through the axes of the beams 112, 114 are respectively fitted. The third and the fourth straight beams 122, 124 converge into a fourth structural node 126 on which a first hinge element 128 - comprising a pair of knuckles 128A, 128B defining a third articulation axis H1 - is formed integral thereto. Furthermore, in correspondence with the second and the third structural node 118, 120 there are formed, respectively, a second and a third hinge element 130, 132 having a respective through hole 134, 136. The holes 134, 136 are coaxial to each other and they define a first articulation axis A.

A fifth straight beam 138 has a first and a second end integral, respectively, with the first structural node 116 and with the fourth structural node 126 joining them and substantially joining the vertices of the "V"s defined by the straight beams, 112, 114, 122, 124.

The wheel support 106 comprises a body 140 and a hub 142 rotatable around a substantially horizontal axis W. The body 140 comprises a foot 144 (figure 5) to which a first ball pin 146, engaged in the spherical seat on the first structural node 116 thereby defining a first ball joint with axis B, is fixed. The body 140 is integral with an arm 147 which defines part of a steering mechanism (not illustrated).

The body 140 further comprises a head 148 to which a second ball pin 150 is fixed. The hub 142 is rotatably connected to a brake disc 152 and it comprises a threaded end 154 onto which a wheel (not illustrated in these figures) which is tightened by means of a nut screwed onto the threaded head 154 is fitted in abutment against the brake disc 152. A caliper 155 is fixed to the body 140 of the wheel support 106 and arranged astride the brake disc 152.

The upper arm 104 comprises a first end 156 in which a through hole having an axis defining a second articulation axis C is provided and it further comprises a second end 158 provided with a spherical seat 160 in which the second ball pin 150 is engaged defining a second ball joint with an axis D.

In this embodiment, the support structure 110 is configured as a reticular structure comprising a first quadrangular frame 164 and a second quadrangular frame 166 joined together by means of a first and a second crosspiece 168, 170 and a box-shaped body 172, such solution not representing a restriction as regards with the present invention. A fourth and a fifth hinge element 174, 176, having respective through holes coaxial to each other, are respectively provided in homologous and aligned vertices of the chassis 164, 166. A sixth hinge element 180 is instead provided on the crosspiece 168, and it comprises a first and second knuckles 182, 184 having respective through holes coaxial to each other and defining a fourth articulation axis H2.
in the box shaped body 172 there is provided a cavity 186 which is quadrangular-shaped and open in correspondence of a first window 188 and a second window 190, opposite with respect to each other, and also open outwards in correspondence of a slot 192 which develops substantially orthogonal to the crosspieces 168, 170 and bearing a graduated scale 193 on the edge thereof.

Inside the cavity 186 (figure 4B) there is slidably mounted a mobile element, particularly a slider 194, comprising, at a first end thereof, a seventh and eight hinge element 196, 198 having through holes coaxial with respect to each other and further comprising a cylindrical pin 200 inserted thereinto and projecting with respect to it.

At a second end of the slider 194 there is fixed a nut 202 within which there is engaged a threaded bar 204 operatively connected to an electric motor 206, preferably a torque motor, operatively connected for actuation to the electronic control unit CU, in turn communicating with a network of sensors installed onboard a vehicle equipped with the suspension 100. The control unit CU is preferably one for the entire vehicle on which the suspension 100 is installed and through the abovementioned sensors it monitors the various setup parameters of the vehicle (for example the steering angle, acceleration, etc.).

The electric motor 206, the bar 204 and the nut 202 together define an actuator unit and they are all coaxial with respect to each other and with respect to a rotational axis S. The cylindrical pin 200 also protrudes into the slot 192.

With reference to figure 4B, the electric motor 206 comprises a stator 206A fixed to the support structure 110 and a rotor 206B to which the threaded bar 204 is rigidly connected in rotation. Preferably, the nut 202 into which the threaded bar 204 is engaged is of the satellite roller type. The scheme may obviously be inverted, by providing for a nut rotatable and rotatably connected to the rotor 206B of the motor 206 and a screw fixed to the slider 194 and translating therewith. In such case, the screw is maintained rotatably fixed.

The coupling of the suspension 100 to the support structure 110 is obtained as follows.

A first end of the lower arm 102, substantially comprising the hinge elements 130, 132, is articulated to the support structure 110 due to the coupling with the hinge elements 174, 176. In particular, the lower arm 102 is assembled on the support structure 110 by inserting a pin 208 in the sequence of through holes 130, 174, 176, 132 of the hinge elements mentioned previously, so that the lower arm 102 is rotatable with respect to the support structure 110 around the axis A. Obviously, the pin 208 may be replaced by two separated pins with the same results.

As previously described, a second end of the lower arm 102, substantially corresponding to the structural node 116, is instead connected to the wheel support 106.

The first end 156 of the upper arm 104 is instead interposed between the hinge elements 196, 198 of the slider 194 and it is rotatably connected thereto by means of a pin 210, so that it defines - therewith - a hinge having an axis coinciding with the articulation axis C. Thus, the first end 156 of the upper arm 104 is articulated with respect to the slider 194 around the axis C.

As previously described, the second end 158 of the upper arm 104 is instead connected to the wheel support 106.

The elastic-damping unit 108 comprises a damper 212 onto which an elastic element 214, particularly a cylindrical helical spring, is fitted. The damper 212 comprises a first end 216 articulated with respect to the lower arm 102 around the axis H1 due to the coupling with the hinge element 128, with which it defines a hinge having the axis H1.

A second end 218 of the damper 212 instead defines a further hinge together with the fifth hinge element 180, and it is thus articulated with respect to the support structure 110 around the axis H2. Thus, the elastic element 214 has an end comprised between the lower arm 102 and the support structure 110.

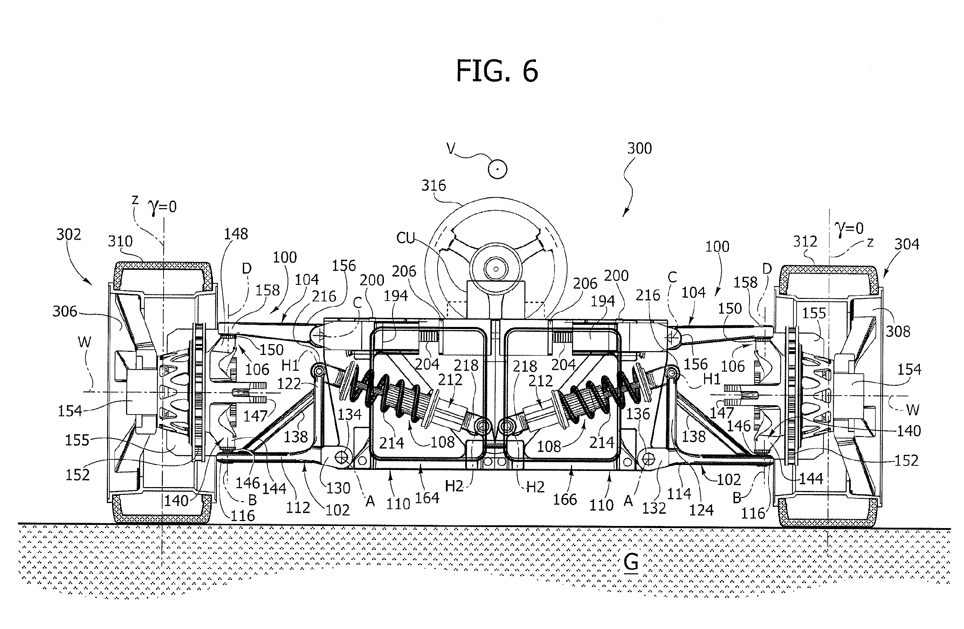

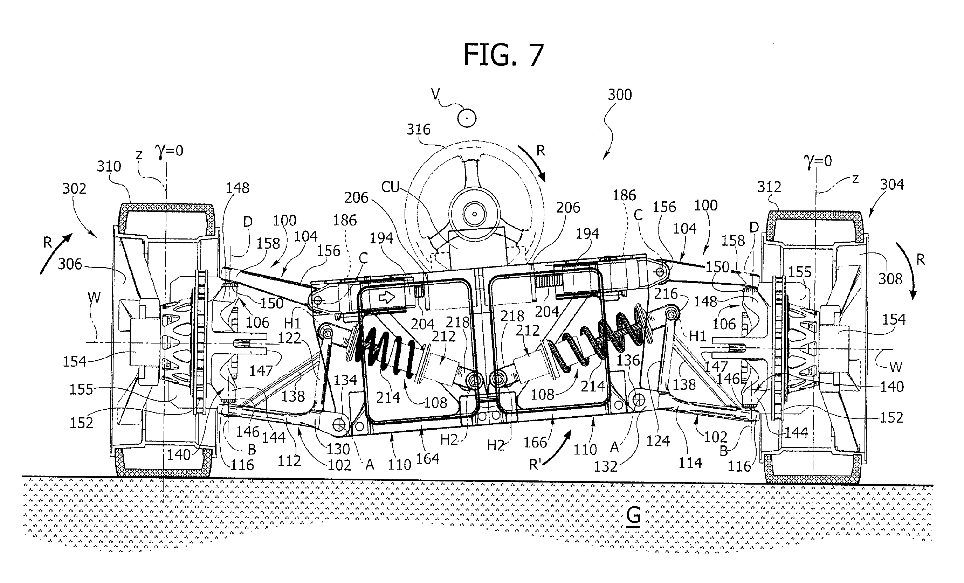

With references to figures 6, 7, a motor vehicle is indicated in its entirety with reference number 300. For the sake of simplicity, only one axle of the vehicle 300 - wherein said axle comprises a pair of suspensions 100, connected to a chassis of the vehicle 300 - is represented.

It should be observed that in figure 6, 7 the chassis of the vehicle is, purely by way of example, defined by joining two support structures 110. The chassis of the vehicle may clearly be of any type, both for example, a body chassis and a tubular chassis, and the embodiment presented in figures 6, 7 should be considered purely by way of non-limiting example in relation to the invention. The support structure 110 may possibly be integrated in the chassis of the vehicle 300.

Furthermore, figures 6, 7 illustrate a pair of wheels 302, 304 fixed to the threaded end 154 of respective suspensions 100. Each wheel 302, 304 comprises a respective rim 306, 308 onto which a corresponding tyre 310, 312 is fitted.

The suspension 100 operates as follows.

Figure 6 illustrates a condition that may indifferently correspond to travelling on a straight road with a substantially even surface or a condition in which the vehicle is standstill. It is assumed that the vehicle 300 is observed from the front (hence the illustrated axle corresponds to a front axle of the vehicle 300), but the description that follows is applicable regardless of the viewing point.

Similarly to what has been described in figure 2, each of the wheels 302, 304 has a zero camber angle γ. In such condition, as described previously, the contact area between the tyres 310, 312 and the ground is maximum, all other parameters being equal, and also the conditions of contact between the tyres and the ground are optimal. Regarding the description that follows, it is assumed that the vehicle 300 is moving at a speed V directed perpendicularly to the plane of the drawing and with vector coming out with respect thereto.

Figure 7 illustrates a situation wherein the vehicle 300 travels through a curvilinear trajectory and in which a steering input has been imparted by rotating a driving wheel 316 of the vehicle 300 in a direction R, herein represented clockwise. Analogously to figures 2, 3, the wheels 302, 304 are represented at a position corresponding to travelling on a straight road just for the sake of clarity.

While travelling through the curvilinear trajectory a roll motion of the chassis of the vehicle 300 (the support structures 110 in this case) in a direction R', opposite to the direction R, is generated. Considering the direction of the roll motion, the wheel 302 is external with respect to the trajectory of the vehicle and thus it is the most loaded one, while the wheel 304 is internal with respect to the trajectory and it is thus the least loaded one.

Hence, the suspension 100 associated to the wheel 302 is subjected to a relative movement with respect to the chassis of the vehicle that can be assimilated to a positive shaking, while the suspension 100 associated to the wheel 304 is subjected to a relative movement with respect to the chassis that can be assimilated to a negative shaking.

The term "positive shaking" is generally used to indicate a movement with a component along a vertical axis coming out with respect to the ground and, in this case, such to cause a compression of the elastic element 214, while, on the contrary, the term "negative shaking" is used to indicate a movement of the suspension 100 with a component directed along a vertical axis entering into the ground and, in this case, such to cause an extension of the elastic element 214. Naturally, the motion described by the suspensions 100 is not an actual movement but it is simply the result of the roll motion of the vehicle 300 negotiating a bend.

During the roll motion of the chassis of the vehicle 300 and simultaneously with the motion of the suspensions with respect thereto, the displacements of the sliders 194 within the corresponding cavities 186 of the support structure 110 are controlled, with the aim of varying the relative position between the axis C and the support structures 110. The sensors network arranged for monitoring a plurality of setup parameters of the vehicle 300 sends signals to the electronic control unit CU. The software for managing the unit CU may be based on control strategies of the known type, which link, for example, several setup parameters of the vehicle 300 by means of mathematical models commonly used in the study of vehicle motion dynamics.

Controlling the motion of the sliders 194 allows varying the position of the end 156 of each upper arm 104 with respect to the corresponding support structures 110. More in detail, the electric motor 206 of the suspension 100 connected to the wheel 302 is actuated through the unit CU for controlling a rotational movement of the threaded bar 204 into the nut 202 which causes a retraction of the corresponding slider 194 into the respective cavity 186. The position of the end 156 and of the axis C with respect to the support structure 110 varies (in particular the end 156 and the axis C are approached to the corresponding support structure 110 until they enter, possibly, thereinto, as visible in figure 7) and the result is a rotation - in the direction R - of the wheel 302 which maintains the camber angle γ thereof at zero. It should be observed that rotation in the direction R of the wheel 306 is such that it nullifies the rotational effect in the opposite direction, an event that usually occurs with suspensions of the known type, and which would bring the value of the camber angle γ to positive values, as described regarding figure 3.

On the contrary, the electric motor 206 of the suspension 100 to which the wheel 304 is connected is actuated through the unit CU for rotating the threaded bar 204 into the nut 202 which causes an extraction of the corresponding slider 194 from the respective cavity 186, and an ensuing movement of the end 156 and the corresponding axis C away with respect to the support structure 110. The result is once again that of a rotation in the direction R which, in such case, counters a camber variation induced into the wheel 304 by the kinematic of the suspension 100 and which would otherwise bring the value of the camber angle of the wheel 304 to negative values.

In summary, the action of the actuator groups on the respective sliders 194, which is attained through the rotation of electric motors 206, is always intended to rotate the wheels 302, 304 around respective substantially horizontal axis such to counter the camber variation which usually occurs during the movement of a suspension with respect to the chassis of the vehicle and by such an extent to maintain the value of the camber angle γ of the wheels 302, 304 themselves at zero.

In addition, it should be observed that the movements controlled by the single actuator units, alongside being in opposite directions (one causes an extraction of a slider 194, the other causes the retraction of the other slider 194) might also be of different extents. This is possible due to the presence - for each wheel of an axle of the vehicle - of an independent actuator unit comprising the motor 206, the threaded bar 204 and the nut 202.

This represents a considerable advantage over the suspensions with active camber angle control and recovery means of the known type mechanically actuated wherein the controlled camber variation is symmetric. As a matter of fact, as well known to a man skilled in the art, the camber variation caused by the roll motion of the chassis of the vehicle and by the kinematic of the suspensions is not symmetric on the two sides of the vehicle. This means that the magnitude of the movement of the sliders 194 controlled by the single corresponding actuator units must be based on the position of the wheel with respect to the curvilinear trajectory (i.e. the internal wheel or external wheel).

In addition, according to an advantageous aspect of the present invention, it is possible to programme a strategy for controlling moveable elements 194 such that it is possible to exclude the action thereof (alongside that of the motors 206) if deemed necessary by the driver of the vehicle, for example when travelling on a smooth and almost entirely rectilinear section of the road. In such case, by means of an control device arranged inside the vehicle it is possible to send a signal to the control unit CU which rotates the motor 206 so as to move the sliders 194 to a position that provides a conventional negative camber setup. Then the unit CU solely ensures that the position assigned to the sliders 194 is maintained, without input of further movements of any type. Thus, the active control of the camber angle, thus intending to shortly summarize the result of the combined action of the electronic control unit CU, the actuator units and the sliders of each suspension 100, may be disabled should the driver of the vehicle desire that.

Furthermore, with respect to the systems of the hydraulic type, the suspensions 100 have an entirely electromechanical system, which is much faster. In case of use of a satellite roller nut (for example model RV 30 x 2 with preload and without play manufactured by Rollvis SA, 136 chemin Pont-du-Centenaire, Plan Les Ouates, Genève, CH), the positioning precision and the velocity of response are further improved with respect to other equivalent motion transmission systems.

Naturally, the present invention shall not be deemed to be restricted to the sole application of components manufactured by Rollvis SA. Other types of components may be equally used.

Furthermore, it should be observed that the structure of the arms of the suspensions 100 described herein is not absolutely restrictive as regards with the present invention, and - regarding this - a man skilled in the art shall observe that the geometry of the arms 102, 104 may be considerably varied with respect to what has been described and illustrated herein leading to the same result.

However, though the suspensions 100 described up to now are prearranged for connection to a steering wheel, a suspension intended for coupling to a non-steering wheel may also be equally provided for.

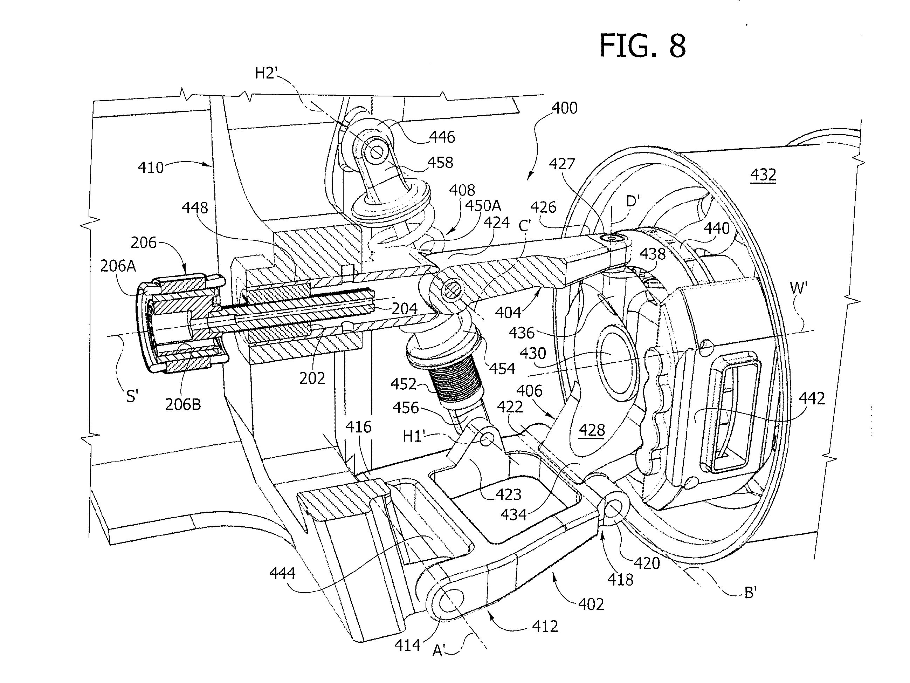

With reference to figure 8, a second embodiment of a suspension according to the invention is indicated with reference number 400. The suspension 400 comprises a first transverse arm 402, a second transverse arm 404, a wheel support 406, an elastic damping unit 408 and it is prearranged for connection to a support structure 410. Similarly to the suspension 100, the first and the second transverse arm 402, 404 shall be indicated in the description that follows respectively using the terms, "lower arm" and "upper arm".

The lower arm 402 is shaped to form a quadrangular frame having a first end 412 comprising a first and a second hinge element 414, 416 having respective coaxial through holes and defining a first articulation axis A'.

The lower arm 402 further comprises a second end 418 including a third and a fourth hinge element 420, 422 also provided with coaxial through holes and defining a hinge axis B' substantially horizontal and parallel to the axis A'.

A fifth hinge element 423 is provided on the lower arm 402 at a substantially intermediate position between the first and the second end 412, 418.

The upper arm 404 is structurally identical to the arm 104 of the suspension 100 and it comprises a first end 424 in correspondence of which a through hole with an axis defining a second articulation axis C' is provided and it further comprises a second end 426 in correspondence of which a spherical seat 427 is provided.

The wheel support 406 comprises a body 428 and a hub 430 rotating around an axis W' and arranged for the connection to a wheel, whose rim 432 is shown only. The body 428 comprises a foot 434 and a head 436. The foot 434 is arranged between the hinge elements 420, 422 of the lower arm 402 and it has a through hole arranged coaxially with respect to those on the abovementioned hinge elements 420, 422 thus defining a hinge through which it is articulated around the axis B' with respect to the end 418 of the lower arm 402. It should also be observed that due to the direction of the axis B', substantially horizontal and longitudinal with respect to the vehicle, the wheel connected to the wheel support 406 cannot perform any steering movement, thus the suspension 400 is of the non-steering type.

The head 436 comprises a ball pin 438 which is engaged in the spherical seat 427 provided at the end 426 forming a ball joint with an axis D', substantially vertical, by means of which the upper arm 404 is articulated to the wheel support 406.

The hub 430 of the wheel support 406 is rotatably connected to a brake disc 440 onto which a caliper 442 fixed to the wheel support 406 engages.

The support structure 410, which may indifferently be part of a chassis of a vehicle on which the suspension 400 is installed or a chassis entirely separable with respect to the vehicle itself, is substantially configured with a reticular structure comprising a sixth hinge element 444, a seventh hinge element 446 and a cavity 448, passing through, within which a mobile element, particularly a slider 450, is slidably mounted.

The slider 450 is substantially identical to the slider 194, except for the absence, in this embodiment, of the cylindrical pin 200. Analogously to the slider 194, the slider 450 comprises a first end in correspondence of which two hinge elements 450A (only one of them is shown in figure 8 due to the sectional representation) are provided and a second end to which there is fixed the nut 202 into which the threaded bar 204, rotatably connected to the rotor 206B of the electric motor 206, is engaged. The stator 206A of the electric motor 206 is instead fixed to the support structure 410. The motor 206, the threaded bar 204 and the nut 202 are all coaxial with respect to each other and with respect to a rotational axis S' and they define, analogously to what has been described regarding the suspension 100, an actuator unit.

The coupling of the suspension 400 to the support structure 410 is obtained as follows.

The first end 412 of the lower arm 402 is arranged astride the sixth hinge element 444, which is thus positioned between the hinge elements 414, 416, and it is rotatably connected thereto, defining a hinge with an axis A'. Thus, the first end 412 is articulated with respect to the support structure 410 around the first articulation axis A'.

The first end 424 of the upper arm 404 is arranged between the hinge elements 450A so that it is articulated to the slider 450 around the second articulation axis C' in a manner entirely analogous to the articulation between the slider 194 and the upper arm 104 of the suspension 100.

The elastic damping unit 408 comprises a damper 452 and an elastic element 454, particularly a cylindrical helical spring, fitted thereonto. The damper 452 comprises a first end 456 articulated to the fifth hinge element 423 of the lower arm 402 around a third articulation axis H1' a second end 458 articulated to the support structure 410 around a fourth articulation axis H2' due to the seventh hinge element 446. Thus, the ends of the elastic element 454 are comprised between the support structure 410 and the lower arm 402.

The operation of the suspension 400 does not vary with respect to that of the suspension 100, with the obvious exception regarding the fact that the wheel connected to the suspension 400 cannot be a steering wheel.

Thus, the actuation of the slider 450 is always aimed at imparting a rotation of the wheel around an longitudinal axis such to zero the camber variation caused by the roll movement, in a bend, of the chassis of the vehicle on which the suspension 400 is installed and by the kinematic of the suspension 100', thus maintaining a zero camber angle γ in any operating condition.

In addition, a man skilled in the art shall observe that what has been described and illustrated is provided purely by way of example and that the elements of the suspensions 100, 400 described herein may be replaced by functional equivalent elements structurally different but capable of attaining the same results. In particular, the structure of the upper and lower arms may widely vary, as shown by the different configuration of the lower arms 102, 402, without departing from the scope of protection of the present invention. However, it shall be observed that the solution presented herein, wherein the suspensions 100, 400 are of the double wishbone type, is particularly useful in case of use on high performance sports cars or racing cars, wherein the needs in terms of lateral grip and driving stability are absolutely more strict with respect to a vehicle intended for road use.

However, it should be pointed out that even on the latter type of vehicle the use of a suspension according to the present invention may be very convenient given that the possibility of using a zero camber set-up allows levelling and homogenising the wear of the tyre during travel and it also provides all advantages in terms of the previously described lateral grip and travel dynamics.

Furthermore, the electromechanical actuation of the moveable elements arranged for varying the camber during the movement of the suspensions guarantees precision and rapidity, otherwise not attainable using systems of the hydraulic type, whose time constants are not generally compatible with the dynamics of the system.

Naturally, without prejudice to the principle of the invention, the construction details and the embodiments may widely vary with respect to what has been described and illustrated purely by way of example, without departing from the scope of protection of the present invention, as defined by the appended claims.

For example, it is possible to define some operating configurations of the system through a software, just like in the case of the brake distributor on racing cars or like in the case of selection of the settings for adjusting the ride height of the car or the rigidity of the suspensions for adaptation to a "sport" driving. Electronics may vary the use of the system according to the required performance.

Furthermore, the actuation of the sliders 194, 450 to maintain the camber angles values almost zero, may have an impact on the entire geometry of the system and the adjustment of the other angles may be required. Such adjustment may be of the pneumatic type (for example controlled through a software) or generated by means of a particular choice of the geometry of the suspensions or implemented through other dynamic corrections.

## Claims

1. A suspension (100, 400) for an axle of a motor vehicle (300), comprising, for each wheel (302, 304) of said axle,:
- a first transverse arm (102, 402),
- a second transverse arm (204, 404),
- a wheel support (106, 406),
and further comprising an elastic-damping unit (108, 408) including an elastic element (214, 454) and a damper (212, 452),
wherein said first transverse arm (102, 402) comprises a first end (130, 132; 412, 414, 416) arranged for the articulation with respect to a support structure (110, 410) and a second end (116, 418) articulated to said wheel support (106, 406),
the suspension (100, 400) being **characterised in that**:
- said second transverse arm (104, 404) comprises a first end (156, 424) articulated with respect to a mobile element (194, 450) operatively connected to an actuator unit (202, 204, 206) and a second end (128, 426) articulated to said wheel support (106, 406),
- there is provided an actuator unit (202, 204, 206;) associated to each wheel (302, 304) of said axle,
- said mobile element (194, 450) is housed in said support structure (110, 410) and it is slidable with respect thereto,
- said actuator unit (202, 204, 206) comprises an electric motor (206) operatively connected to said mobile element (194, 450),
- said actuator unit (202, 204, 206) is actuatable to cause a sliding of said mobile element (194, 450) with respect to said support structure (110, 410) to vary the position of the first end (156, C; 424, C') of said second transverse arm (104, 404) with respect to said support structure (110, 410),
- it comprises a control unit (CU) operatively connected to said electric motor (206) to control the actuation of said mobile element (194, 450) for controlling a camber angle (γ) of said wheel (302, 304)
- said elastic element (214, 454) has ends comprised between said first transverse arm (102, 402) and said support structure (110, 410).

2. The suspension (100, 400) according to claim 1, **characterised in that** said actuator unit further comprises:
- a threaded bar (204) rotatable and rotatably connected to a rotor (206B) of said electric motor (206),
- a nut (202) rotatably fixed and fixed to said mobile element (194, 450) and engaged on said threaded bar (204).

3. The suspension (100, 400) according to claim 2, **characterised in that** said nut (202) is of the satellite roller type.

4. The suspension (100, 400) according to claim 2 or 3, **characterised in that** said electric motor (206) is a torque motor.

5. The suspension (100, 400) according to claim 2, **characterised in that** said mobile element is a slider (194, 450) which is slidable in a cavity (186, 448) provided in said support structure (110, 410), said slider (194, 450) comprising a first end including a pair of hinge elements (196, 198; 450A) and a second end onto which said nut (202) is fixed.

6. The suspension (100, 400) according to claim 1 **characterised in that** said first transverse arm (102, 402) is a lower transverse arm and **in that** said second transverse arm (104, 404) is an upper transverse arm.

7. The suspension (100, 400) according to claim 1 or 6, **characterised in that** said wheel support (106, 406) comprises a body (140, 428) and a hub (142, 430) rotatable (W, W') and arranged for the connection to said wheel (302, 304).

8. The suspension (100, 400) according to claim 7, **characterised in that** said body (140, 428) of said wheel support (106, 406) comprises a head (148, 436) to which a ball pin (150, 438) is fixed, wherein said ball pin (150, 438) is housed in a spherical seat (160, 427) provided at said second end (158, 426) of said second transverse arm (104, 404) defining a ball joint by means of which said second transverse arm (104, 404) is articulated to said wheel support (106, 406).

9. The suspension (100), according to claim 8, **characterised in that** said body (140) of said wheel support (106) comprises a foot (144) onto which there is fixed a ball pin (146) housed in a spherical seat provided at said second end (116) of said first transverse arm (102) defining a further ball joint by means of which said first transverse arm (102) is articulated to said wheel support (106).

10. The suspension (400) according to claim 8, **characterised in that** said body (428) of said wheel support (406) comprises a foot (434) articulated to said first transverse arm (402) by means of a hinge with axis (B') substantially horizontal and longitudinal.

11. The suspension (100) according to claim 1 or 6, **characterised in that** said first transverse arm (102) comprises:
- a first and a second straight beam (112, 114) coplanar with respect to each other and substantially arranged to form a "V" and integral at a first structural node (116),
- a second and a third structural node (118, 120) on which a third and a fourth straight beam (122, 124) are fitted, respectively, arranged substantially to form a "V", coplanar and substantially orthogonal with respect to a plane passing through the axes of said first and second straight beam (112, 114), said third and fourth straight beam converging in a fourth structural node (126) on which a first hinge element (128) is formed,
- a fifth straight beam (138) joining said first structural node (116) and said fourth structural node (126).

12. The suspension (100) according to claim 11, **characterised in that** at said second and third structural node (118, 120) are provided for, respectively, a second and a third hinge element (130, 132) defining a first articulation axis (A) and arranged for a connection (208) to corresponding hinge elements (174, 176) of said support structure (110).

13. The suspension (100) according to claim 12, **characterised in that** said damper (212) comprises a first end (216) articulated to said first hinge element (128) and a second end (218) articulated (180) to said support structure (110) and **in that** said elastic element (214) is fitted onto said damper (212).

14. The suspension (400) according to claim 1 or 6, **characterised in that** said first transverse arm (402) has the shape of a quadrangular frame and it comprises, at said first end (412) a first and a second hinge element (414, 416) having respective coaxial through holes and defining a first articulation axis (A'), said first and second hinge element (414, 416) being arranged for a connection to a corresponding hinge element (444) provided on said support structure (410).

15. The suspension (400) according to claim 14, **characterised in that** said damper (452) comprises a first end (456) articulated to said support structure (410) and a second end (458) articulated (423) to said lower arm (402) and **in that** said elastic element (454) is fitted onto said damper (452).
